# EUROPÄISCHE PATENTANMELDUNG

(11) **EP 3 608 853 A1**
(43) Veröffentlichungstag der Anmeldung: **12.02.2020**
(21) Anmeldenummer: 18020370.5
(22) Anmeldetag: 06.08.2018
(51) Int. Cl.: G06Q 10/10, G06F 17/30

(54) **VERFAHREN UND/ODER EINRICHTUNG ZUR EVALUIERUNG UND/ODER ERZEUGUNG EINER DYNAMISCHEN INTEROPERABILITÄT VON DATEN/INFORMATIONEN IN DER M2M-KOMMUNIKATION**

(71) Anmelder: Fritz, Sabine, 73635 Rudersberg-Zumhof (DE)
(72) Erfinder: Fritz, Sabine, 73635 Rudersberg-Zumhof (DE)

(57) **Zusammenfassung**

Im Stand der Technik existieren keine Verfahren und/oder Einrichtungen, die für eine unternehmens-, branchen- und länderübergreifende semantische Interoperabilität zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation nötig wären. Um eine digitalisierte industrielle Fertigung zu erlangen, ist es jedoch Voraussetzung, dass verschiedene Maschinen und Cyber Physical Things miteinander kommunizieren und Informationen austauschen können.

Aufgabe der Erfindung ist die Lösung des beschriebenen technischen Problems durch die Bereitstellung einer Interoperabilitäts-Einrichtung zur dynamischen Evaluierung und/oder Erzeugung einer Interoperabilität von Daten/Informationen innerhalb einer Maschine, zwischen Maschinen, zwischen Maschinen und Cyber Physical Things und zwischen Cyber Physical Things, sowie zwischen Cyber Physical Things, Maschinen und zentralen Schaltstellen. Und hierdurch die Ermöglichung des "Plug&Work" von Maschinen und Cyber Physical Things insbesondere im Rahmen der M2M-Kommunikation und Industrie 4.0. Weiter soll ein entsprechendes Interoperabilitäts-Verfahren geschaffen werden und ein Programm, dass ein derartiges Verfahren ausführt.

Mit der Folge, dass ein "Plug&Work" im Rahmen der M2M-Kommunikation und Industrie 4.0 ermöglicht wird, da die einzelnen Maschinen, Cyber Physical Things und Steuerungen sich maschinen-, hersteller- und länderübergreifend automatisch semantisch verstehen.

## Beschreibung

### 1. Gebiet der Erfindung

Die vorliegende Erfindung betrifft ein Verfahren und/oder eine Einrichtung zur dynamischen Evaluierung und/oder Erzeugung einer Interoperabilität von Daten/Informationen. Insbesondere betrifft die Erfindung die Evaluierung und/oder Erzeugung einer Interoperabilität von Daten/Informationen in Form von beispielsweise Termen und/oder Zeichen innerhalb von Unternehmen (abteilungsübergreifend), zwischen Unternehmen (unternehmensübergreifend), zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation.

### 2. Beschreibung des Standes der Technik

In den Unternehmen der Zukunft soll die industrielle Produktion enger als bisher mit moderner Informations- und Kommunikationstechnik verzahnt werden. Technische Grundlage hierfür sind intelligente und digital vernetzte Systeme. Mit ihrer Hilfe soll sich die Produktion weitestgehend selbst organisieren. Dazu kommunizieren und kooperieren Maschinen, Anlagen, Logistik und Produkte direkt miteinander. Durch die Vernetzung soll es möglich werden, nicht mehr nur einen einzelnen Produktionsschritt, sondern eine ganze Wertschöpfungskette zu optimieren. Dieses Netz soll zudem alle Phasen des Lebenszyklus des Produktes einschließen, angefangen bei der Idee eines Produkts über dessen Entwicklung, Fertigung, Nutzung und Wartung bis hin zum Recycling. Ermöglicht wird dadurch eine sehr flexible und selbstorganisierende Produktion und hierdurch eine deutliche Steigerung der Wirtschaftlichkeit. In der Fachwelt wird für dieses Konzept häufig der Begriff Industrie 4.0 verwendet.

Bei derartigen Konzepten sind sehr viel mehr Daten als bisher zu verarbeiten. Erzeugt werden diese zusätzlichen Daten insbesondere von Maschinen, Sensoren und mobilen Geräten. Da die dabei anfallenden Datenmengen zu groß, zu komplex und zu schwach strukturiert sind, um sie mit manuellen und herkömmlichen Methoden der Datenverarbeitung auszuwerten, spricht man häufig auch vom Problem des Big Data.

Es bereitet jedoch vielen Unternehmen bereits jetzt viel Mühe, die anfallenden und relativ überschaubaren Datenmengen zuverlässig und sinnvoll zu verarbeiten. Häufig sind die erfassten Unternehmensdaten qualitativ so schlecht, dass sie nicht für Datenanalysen verwendet werden können, wie sie bei Konzepten wie Industrie 4.0 benötigt werden.

Wegen der mangelhaften Qualität der Unternehmensdaten wird bereits von der verlorenen Big-Data-Illusion gesprochen. Somit bleibt die Kommunikation zwischen Maschinen (M2M-Kommunikation) und die Umsetzung moderner Konzepte wie Industrie 4.0 für viele Unternehmen Zukunftsmusik.

Mangelhafte Datenqualität stellt jedoch nicht nur ein Hemmnis für die zukünftige Entwicklung dar, sondern führt auch bei den bereits eingesetzten Systemen zur Datenverarbeitung wie dem Enterprise Content Management (ECM) zu Schwierigkeiten. ECM geht von dem Ansatz aus, alle Unternehmensdaten auf einer einheitlichen Plattform intern und extern zur Nutzung bereitzustellen. ECM soll Informationen unabhängig von der Quelle und unabhängig von der benötigten Nutzung verwalten. Dies umfasst alle Prozesse, die mit Hilfe digitaler Informations- und Kommunikationstechnologien unterstützt werden. Dieses Single-Source-Verfahren umfasst die digitale Verarbeitung von Unternehmensdaten in Dokumentenmanagementsystemen (DMS), Enterprise Resource Planning (ERP) oder Produktionsplanungs- und Steuerungssystemen (PPS), bis hin zu Redaktionstools (CMS) und Übersetzungstools (CAT).

Um wettbewerbsfähig zu bleiben, haben viele Unternehmen technisch aufgerüstet. Dieser Aufrüstung folgt allerdings häufig die ernüchternde Erkenntnis, dass die hochdigitalisierten Lagerhaltungssysteme oder Online-Shops nicht den erwarteten wirtschaftlichen Erfolg bringen. Unternehmensinterne Redaktions- und Übersetzungstools führen trotz ausgereifter technischer Features zu einer immer schlechteren Textqualität.

Auch hier liegt der Grund in einer mangelhaften Qualität der verarbeiteten Unternehmensdaten. Denn die Qualität der mit modernsten Technologien verarbeiteten Unternehmensdaten hängt maßgeblich von der Qualität der Basisdaten ab.

Jedes Unternehmen, jede Abteilung eines Unternehmens und jede sonstige Infrastruktur stellt unterschiedliche Anforderungen an Daten und Informationen in Form von Termen und/oder Zeichen. Gleichzeitig müssen sich diese jedoch gegenseitig "verstehen" und eine Interoperabilität im Rahmen der M2M-Kommunikation (Machine-to-Machine) ermöglichen. Moderne Konzepte wie Industrie 4.0 oder die M2M-Kommunikation erfordern allgemeingültige und vereinheitlichte Terme und/oder Zeichen. Gleichzeitig benötigen Unternehmen unternehmens- und abteilungsspezifische Terme und/oder Zeichen. Ein Zwiespalt, der die Technik und Realisierung von Industrie 4.0 hemmt. Und nur durch ein dynamisches Verfahren gelöst werden kann.

Im Stand der Technik existieren keine Verfahren, die unternehmensunabhängige, maschinenlesbare Daten generieren, die für die Interoperabilität von Daten innerhalb von Unternehmen (abteilungsübergreifend), zwischen Unternehmen (unternehmensübergreifend) im Rahmen von Industrie 4.0 und der M2M-Kommunikation nötig sind. Stattdessen erarbeitet derzeit jedes Unternehmen unabhängig von anderen Unternehmen seine eigenen Unternehmensdaten und entwickelt eine eigene Terminologie.

Innerhalb von Unternehmen gibt es wiederum unterschiedliche Abteilungen, die ebenfalls eigene Unternehmensdaten erzeugen und eine eigene Terminologie entwickeln. Bereits bei einer abteilungsübergreifenden, unternehmensweiten Terminologie kommt es aktuell häufig zu unüberbrückbaren Schwierigkeiten, da jede Abteilung unterschiedliche Anforderungen an die Terminologie stellt. Um eine Interoperabilität zu gewährleisten, investieren die Unternehmen sehr viel Zeit und Kosten.

Ein einfaches Beispiel soll diese Schwierigkeiten verdeutlichen:
Es sei angenommen, dass ein Ingenieur in einem Unternehmen eine Zeitschaltuhr entwickelt. Er legt diesen Gegenstand unter der Bezeichnung "Timer" in den Stammdaten ab und ordnet eine Artikelnummer zu. Ein anderer Ingenieur benötigt den gleichen Gegenstand, sucht in den Stammdaten jedoch nach "Zeitschalter". Da er nichts findet, entwickelt er den Gegenstand neu und legt ihn ab als "Zeitschalter" mit einer weiteren Artikelnummer in den Stammdaten ab. Ein Tochterunternehmen benötigt den gleichen Gegenstand, sucht in den Stammdaten nach "Zeitschaltuhr" und findet dazu nichts. Deswegen kauft das Tochterunternehmen den Gegenstand von einem externen Anbieter ein und legt ihn unter "Zeitschaltuhr" ab.

Dieses Beispiel zeigt die Problematik wie sie bereits innerhalb eines Unternehmens auftritt. Industrie 4.0 potenziert diese Problematik, da hier ein unternehmens-, branchen- und länderübergreifender Daten- und Informationsaustausch zwischen Maschinen erforderlich ist, der ohne eine Einwirkung der menschlichen Verstandestätigkeit erfolgen muss.

Im Stand der Technik existieren keine Verfahren und/oder Einrichtungen, die unternehmensunabhängige, maschinenlesbare Daten generieren, die für die Interoperabilität von Daten zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation nötig wären. Um eine digitalisierte industrielle Fertigung zu erlangen, ist es jedoch Voraussetzung, dass verschiedene Maschinen und Cyber Physical Things miteinander kommunizieren und Informationen austauschen können.

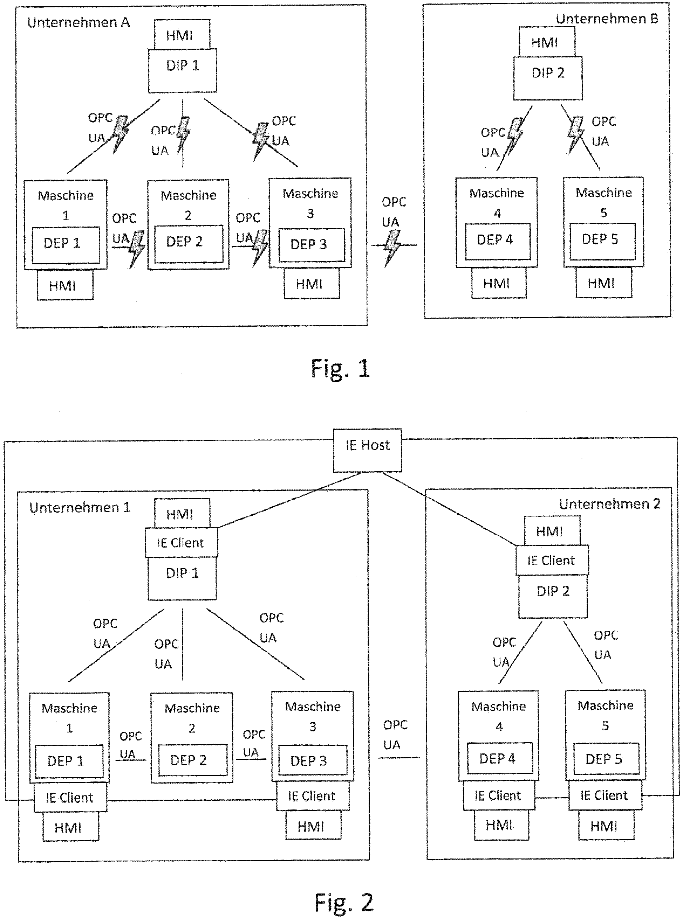

Ein einfaches Beispiel soll diese Schwierigkeiten verdeutlichen:
Die Maschine 1 des Herstellers A wird mit der Maschine 2 des Herstellers B und der Maschine 3 des Herstellers C zu einer Industrie-4.0-Anlage verkettet. Jede der verketteten Maschinen soll hier einen bestimmten Prozessschritt abarbeiten (vgl. Fig.1).

Industrie 4.0 ist die Vision eines cyber-physischen Produktionssystems, in dem Maschinen, Anlagen und Objekte intelligent mittels einer M2M-Kommunikation miteinander kommunizieren. Und dies ohne menschliche Interaktion und über Anbieter-, Hersteller- und Ländergrenzen hinweg. Das Ergebnis ist die sogenannte Smart Factory.

Im aktuellen Beispiel verbinden M2M-Technologien Endgeräte mit einer zentralen Schaltstelle und bestehen jeweils aus drei Basiskomponenten:
- dem Datenendpunkt (Data End Point = DEP), z.B. zu überwachender Behälter in der Maschine
- dem Kommunikationsnetz (Mobilfunkt-Netz, kabelgebundenes Netz, RFID o.ä.)
- dem Datenintegrationspunkt (Data Integration Point = DIP), z.B. ein Server, der die Füllstände des Behälters überwacht.

Im vorliegenden Beispiel ist der Datenendpunkt (DEP) ein zu überwachender Behälter für Verbrauchsmaterialien in einer Maschine. Ein Sensor überwacht den entsprechenden Füllgrad des Behälters und mit Hilfe der Sender überträgt die Maschine ihre Daten über ein Kommunikationsnetz an den Datenintegrationspunkt (DIP), den Empfänger. Der Datenintegrationspunkt ist ein Server, der die technischen Parameter der Maschine überwacht, auswertet und bei Bedarf die notwendigen mechanischen Aktionen der Maschinen auslöst. Sendet ein DEP z.B. die Fehlermeldung *Füllgrad zu niedrig,* so wird der Prozess des Nachfüllens automatisch gestartet. Im vorliegenden Fall handelt es sich um das Verbrauchsmaterial *Sechskantschraube.* Für die Übertragung der Daten wird das Kommunikationsprotokoll OPC-UA als Standard für Industrie 4.0 eingesetzt.

Im vorliegenden Beispiel werden drei Maschinen unterschiedlicher Hersteller zu einer Fertigungslinie zusammengestellt. Jede dieser Maschinen enthält die oben erläuterten DEPs. Diese drei Maschinen sollen nun via M2M-Technologien automatisch miteinander kommunizieren und als Konsequenz selbständig ohne menschliche Interaktion entsprechende mechanische Aktionen untereinander auslösen.

Des Weiteren soll der DIP dieser Maschinen mit einem DIP von Maschinen eines externen Zuliefererunternehmens (Fig. 1, Unternehmen B) automatisch kommunizieren, um bei dessen Maschinen bei Bedarf automatisch die Produktion auszulösen.

Die jeweiligen Informationen wurden über das Human Maschine Interface (HMI) vom jeweiligen Maschinenhersteller in den einzelnen Maschinen hinterlegt.

### Beispiel:

OPC-UA Values Maschine 1: Füllstand gering = FÜ_343o; Sechskantschraube = V_8675P
OPC-UA Values Maschine 2: Fülllevel gering= FL_e543; Schraube DIN 4017 = S_9484
OPC-UA Values Maschine 3: filling level low= F_4533B; hexagon head screw = H_4
OPC-UA Values Maschine 4: level refill low = F_3334k; screw, hexagon head = S_878

Unterschreitet der Füllgrad des Behälters der Maschine 2 den Grenzwert, so meldet die DEP2 an DIP 1 die ID FL_e543. DIP1 versteht diese ID nicht, da DIP1 an die ID der Maschine 1 angepasst wurde, und somit für *Füllstand gering* auf die ID FÜ_343o wartet. Mit der Folge, dass Maschine 1 weiterhin Objekte an Maschine 2 weiterleitet, ungeachtet des auslaufenden Verbrauchsmaterials in Maschine 2. Gleichzeitig kann DIP1 die DIP2 des Zuliefererunternehmens und damit Maschine 4 nicht zum automatischen Start der Produktion des geforderten Verbrauchsmaterials bringen, da DIP2 weder die von DIP1 gesendete ID FL_e543, noch die ID S_9484 versteht.

Als Folge funktionieren die automatische M2M-Kommunikation und die resultierende selbständige ohne menschliche Interaktion erfolgende Auslösung mechanischer Folgeprozesse nicht. Grund: den Variablen bzw. Values sind unterschiedliche Informationen zugewiesen. Die Maschinen verstehen sich nicht und die resultierenden mechanischen Aktionen der einzelnen Maschinen sind falsch bzw. nicht vorhanden.

Die Informationen der einzelnen Maschinen stimmen nicht überein und führen zwangsläufig zu einem Fehlschlagen der M2M-Kommunikation. Die einzelnen Maschinen verstehen nicht, welcher Prozess ausgelöst, was für ein Gegenstand transportiert bzw. produziert werden soll. Das Prinzip "Plug & Work" schlägt zwangsläufig fehl.

Daher ist eine wirklich intelligente M2M-Komunikation trotz standardisierter Übertragungsprotokolle und Schnittstellen zum aktuellen Stand der Technik nicht möglich. Werden Fertigungslinien aus mehreren Maschinen unterschiedlicher Hersteller zusammengestellt, so muss die Problematik momentan noch durch individuelle, durch den Menschen durchgeführte, Anpassungen des Kommunikationsprotokolls OPC-UA umgangen werden. Jede Linie muss individuell und manuell angepasst werden. Jede Entität, Zustand und Prozess wird dazu in jedem Unternehmen separat in der physischen Welt erfasst und in die digitale Welt übertragen. Jeder Maschine muss immer individuell beigebracht werden, dass beispielsweise eine Sechskantschraube, eine Schraube DIN 4017, eine hexagon head screw und eine screw, hexagon head das gleiche Objekt ist und eine einheitliche ID benötigt. Das Gleiche gilt beispielsweise für Füllstand, Fülllevel und filling level.

Bei der unternehmensübergreifenden M2M-Kommunikation ist dies jedoch selbst durch eine individuelle Anpassung kaum realisierbar. Das Industrie 4.0-Prinzip "Plug & Work" ist somit trotz offener Schnittstellen nicht möglich, da die Maschinen sich nicht verstehen. D.h. es kommt zu keinem kausal absehbaren Erfolg, da die erforderlichen physikalischen Aktionen der Maschinen und/oder Cyber Physical Things nicht ausgelöst werden.

Aktuelle Szenarien des M2M-Kommunikation in der industriellen Produktion sind bisher auf sehr stark limitierte Umfelder begrenzt. Beispielweise kommunizieren nur zwei Maschinen des eigenen Unternehmens über ganz banale Dinge wie "Maschine an" / "Maschine aus" miteinander. Sollen in Zukunft Maschinen unternehmens- und länderübergreifend und ohne Interaktion des Menschen miteinander kommunizieren, so scheitert dies zum aktuellen Stand der Technik an der fehlenden semantischen Interoperabilität.

Im Stand der Technik sind Softwareprogramme bekannt, um Stil, Grammatik und Terminologie im Rahmen der Texterstellung zu prüfen. Diese im Stand der Technik bekannten Verfahren und Vorrichtungen basieren insbesondere auf einer Fuzzy Match- und/oder semantischen Kontrolle. Die Kontrolle einer Terminologie kann als Prozess betrachtet werden, bei dem eine Texteinheit in einem Ausgangstext gegen eine individuell zu hinterlegende Terminologie geprüft wird. (z.B. Congree, acrolinx). Die Nachteile solcher Verfahren bestehen darin, dass die zu hinterlegende Terminologie individuell für jedes Unternehmen und/oder Abteilung erarbeitet und hinterlegt werden muss. Das Verfahren eignet sich für unternehmensinterne Geschäftsprozesse aber nicht für die M2M-Kommunikation. Eine Interoperabilität der Daten zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation ist nicht möglich.

Im Stand der Technik sind außerdem Klassifikationssysteme bekannt, die branchenübergreifende Produktdatenstandards für die Klassifizierung und Beschreibung von Produkten und Dienstleistungen liefern (z.B. ecl@ss, ETIM). Ziel dieser Klassifikationssysteme ist die Vereinfachung des elektronischen Handels klassifizierter Produkte. Sie dienen als eine standardisierte Warengruppenstruktur in ERP-Systemen. Die Nachteile solcher Klassifikationssysteme bestehen darin, dass ihre Daten semantisch und/oder linguistisch nicht konsistent sind und ihr Umfang häufig nicht normen- bzw. rechtskonform ist. Der Anspruch an ein dynamisches Verfahren kann nicht erfüllt werden, somit sind auch diese Klassifikationssysteme nicht für die M2M-Kommunikation geeignet. Eine Interoperabilität der Daten zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation ist nicht möglich.

Im Stand der Technik sind ferner Identifikationssysteme bekannt, mit deren Hilfe jedes Produkt weltweit eindeutig bestimmt werden kann (z.B. GTIN, GLN, GPC). Die Nachteile solcher Identifikationssysteme bestehen darin, dass sie sich auf die individuellen Produkte einzelner Unternehmen beziehen und nicht auf allgemeingültige Bezeichnungen von Gegenständen. Der Anspruch an ein dynamisches Verfahren kann nicht erfüllt werden. Somit sind diese Identifikationssysteme ebenfalls nicht für die M2M-Kommunikation geeignet. Eine Interoperabilität der Daten zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommuikation ist nicht möglich.

Im aktuellen Stand der Technik sind Verfahren zur Erstellung von Taxonomien und/oder Ontologien bekannt, z.B. WordNet. Die Nachteile solcher Verfahren bestehen darin, dass die Ergebnisse nur individuell verwendet werden können und die technischen und ökonomischen Anforderungen nicht erfüllen. Somit sind auch diese Verfahren nicht für die M2M-Kommunikation geeignet. Eine Interoperabilität der Daten zwischen Maschinen, zwischen Maschinen und Cyber Physical Things, zwischen Cyber Physical Things, sowie zwischen Cyber Physical Things und zentralen Schaltstellen im Rahmen von Industrie 4.0 und M2M-Kommunikation ist nicht möglich.

Im aktuellen Stand der Technik sind außerdem unterschiedliche Terminologiesammlungen bekannt (z.B. DinTerm, IATE usw.). Die Nachteile solcher Terminologiesammlungen bestehen darin, dass sie zu fachspezifisch sind und sich gegenseitig widersprechen. Sie verfolgen nicht das Ziel der Interoperabilität und können von Unternehmen zur Lösung des Problems daher nicht übernommen werden.

Es handelt sich um rein standardisierte Daten, die die erforderliche Dynamik nicht leisten können.

Die M2M-Kommunikation kann nicht durch eine starre standardisierte Terminologie gelöst werden, da einerseits unternehmens- bzw. abteilungsspezifische Anforderungen an Daten/Informationen einen dynamischen Einsatz voraussetzen und zum anderen Änderungen permanent abgefangen werden müssen.

Das Verfahren und/oder Einrichtung der vorliegenden Erfindung ermöglicht eine dynamische Interoperabilität:
- die vorliegende Erfindung zeichnet sich dadurch aus, dass Unternehmen mit einem zentralen, permanent aktuellen Datenbestand arbeiten können, die Daten jedoch "wissen", welche Anforderungen sie in welcher Situation erfüllen müssen. Beispielsweise eine Textlänge von max. 40 Zeichen in Materialkurztexten, eine Übereinstimmung mit ecl@ass im Einkauf, einer normenkonformen Beschreibung in der Technischen Dokumentation oder einer Industrie 4.0-konformen-Benennung für die Machine-to-Machine Kommunikation. Gleichzeitig "verstehen" die Daten, dass es sich um das gleiche Objekt, Zustand oder den gleichen Prozess handelt, obwohl diese in unterschiedlichen Abteilungen unterschiedlich benannt werden.
- der Input und die Metadaten der Interoperabilitätseinrichtung und/oder-verfahren werden permanent an Änderungen angepasst werden. In der bevorzugten Ausführung betrifft dies beispielsweise Änderungen im Bereich Gesetze, Normen, Klassifikationssysteme usw.

### ZUSAMMENFASSUNG DER ERFINDUNG

Aufgabe der Erfindung ist die Lösung des beschriebenen technischen Problems durch die Bereitstellung einer Interoperabilitäts-Einrichtung zur dynamischen Evaluierung und/oder Erzeugung einer Interoperabilität von Daten/Informationen innerhalb einer Maschine, zwischen Maschinen, zwischen Maschinen und Cyber Physical Things und zwischen Cyber Physical Things, sowie zwischen Cyber Physical Things, Maschinen und zentralen Schaltstellen. Und hierdurch die Ermöglichung des "Plug&Work" von Maschinen und Cyber Physical Things insbesondere im Rahmen von M2M und Industrie 4.0. Weiter soll ein entsprechendes Interoperabilitäts-Verfahren geschaffen werden und ein Programm, dass ein derartiges Verfahren ausführt.

Mit der Folge, dass ein "Plug&Work" im Rahmen der M2M-Kommunikation und Industrie 4.0 ermöglicht wird, da die einzelnen Maschinen, Cyber Physical Things und Steuerungen sich maschinen-, hersteller- und länderübergreifend automatisch semantisch verstehen (Fig. 2).

Vorstehende Aufgabe wird durch die Gegenstände der Ansprüche 1 bis 26 gelöst.

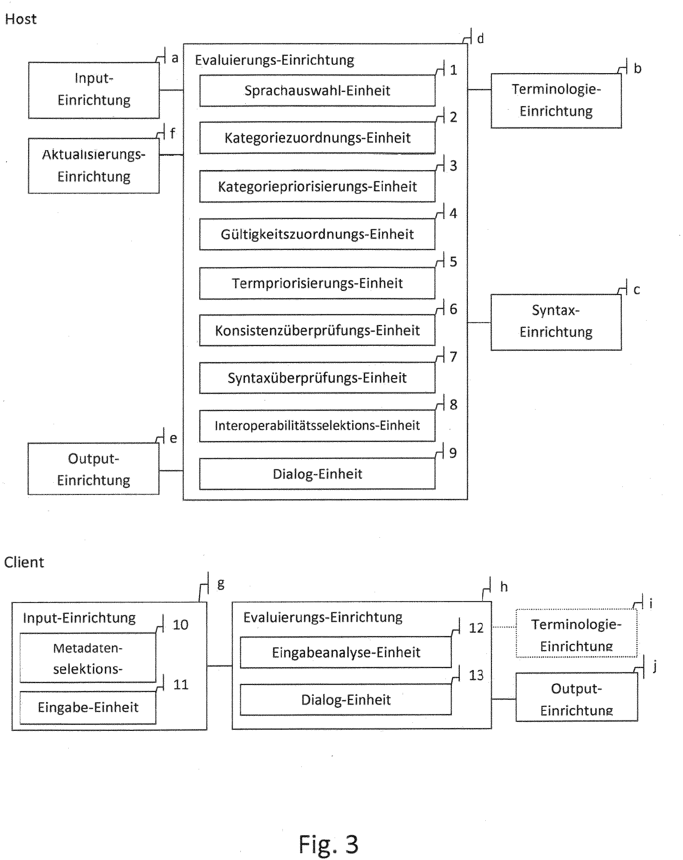

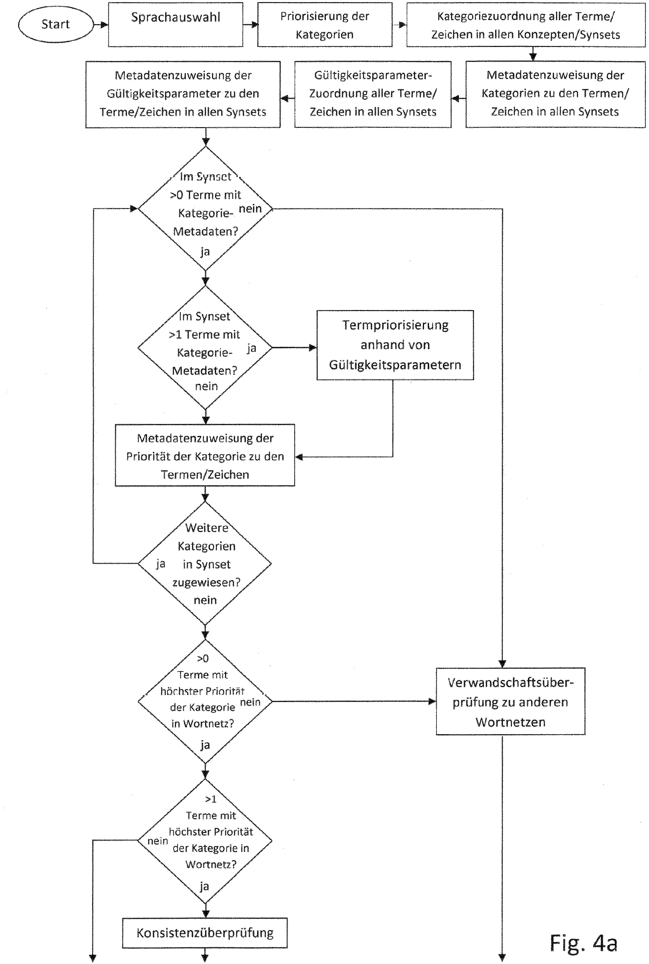

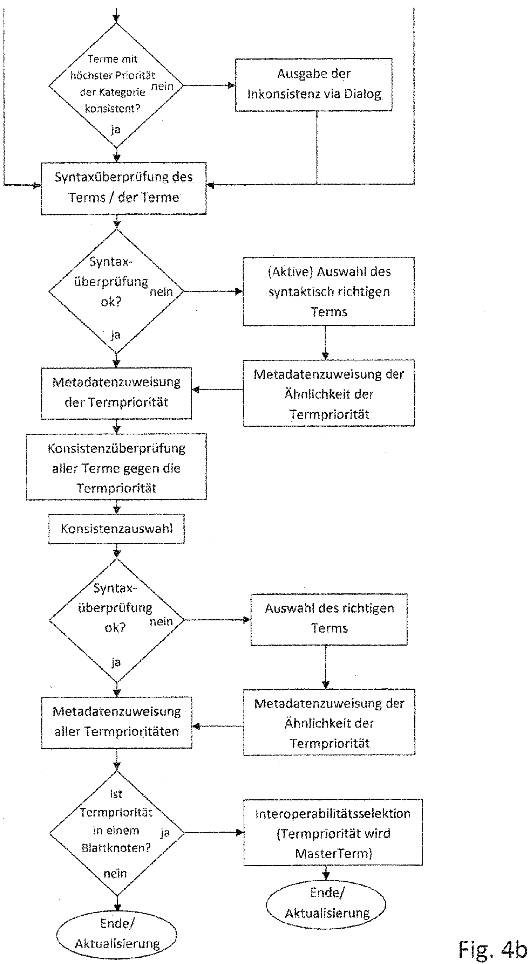

Die Erfindung betrifft eine Interoperabilitäts-Einrichtung (Fig. 3), bestehend aus einem Host,
a) der eine Interoperabilität für die M2M-Kommunikation dynamisch evaluiert und erzeugt.
b) diese dynamische Evaluierung und Erzeugung permanent durchführt.
c) bestehend aus
   - einer Input-Einrichtung (a in Fig. 3), die der Eingabe dynamisch zu evaluierender maschinenlesbarer Daten/Informationen dient, wobei die Daten aus einem bzw. mehreren Terme und/oder Zeichen bestehen,
   - einer Terminologie-Einrichtung (b in Fig. 3), in der die Terme und/oder Zeichen gespeichert sind, und denen Attribute für ein semantisches Wortnetz/Teilwortnetz - in der bevorzugten Ausführung ein Baumdiagramm - entnehmbar sind,
   - einer Syntax-Einrichtung (c in Fig. 3), welche die für die Interoperabilität erforderlichen linguistischen Beziehungen zwischen den einzelnen Termen und/oder Zeichen bereitstellt. Wobei der Inhalt der Terminologie-Einrichtung (b in Fig. 3) und der Syntax-Einrichtung (c in Fig. 3) in einem Speicher gespeichert sind,
   - einer Evaluierungs-Einrichtung (d in Fig. 3), die mittels Funktions-Einheiten auf Basis des Inhalts der Terminologie-Einrichtung (b in Fig. 3) die für die Interoperabilität passenden Terme und/oder Zeichen und/oder IDs eruiert. Die Evaluierungs-Einrichtung weist als Funktionseinheiten eine Sprachauswahl-Einheit (1), eine Kategoriezuordnungs-Einheit (2), eine Kategoriepriorisierungs-Einheit (3), eine Gültigkeitszuordnungs-Einheit (4), eine Termpriorisierungs-Einheit (5), eine Syntaxüberprüfungs-Einheit (7), eine Konsistenzüberprüfungs-Einheit (6), eine Dialog-Einheit (9) und eine Interoperabilitätsselektions-Einheit (8) auf,
   - einer Output-Einrichtung (e in Fig. 3), die das für die Interoperabilität evaluierte maschinenlesbare semantische Wortnetz/Teilwortnetz, sowie die für die Interoperabilität relevanten Terme und/oder Zeichen und/oder IDs ausspielt,
   - einer Aktualisierungs-Einrichtung (f in Fig. 3) zur Aktualisierung, Reduzierung und/oder Änderung der Wortnetze/Teilwortnetze und Konzepte und/oder Synsets,

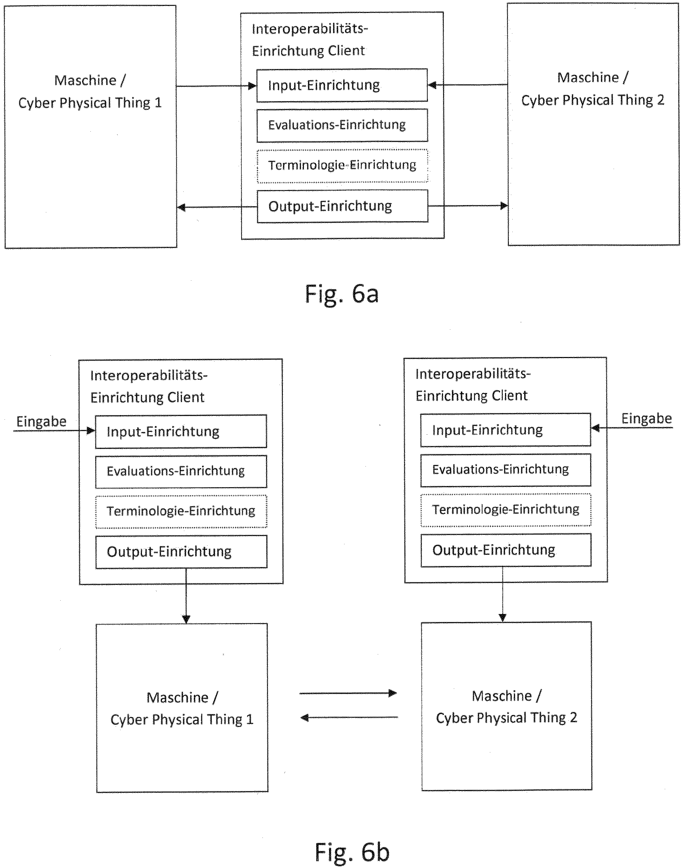

Clients, die
a) unternehmensunabhängig regelmäßig die aus dem Verfahren und/oder Einrichtung des Hosts resultierenden evaluierten maschinenlesbaren Terme und/oder Zeichen beziehen, beispielsweise via eines Info-Push- oder Info-Pull-Dienstes.
b) sich in der bevorzugten Ausführung an den Übergängen vom physischen Objekt, Zustand oder Prozess zum digitalen Objekt, Zustand oder Prozess aller Teilnehmer der M2M-Kommunikation (Fig. 6b) befinden. Beispiel: Der Client wird in die HMI einer Maschine eingebunden.
c) sich zwischen Maschinen befinden können, somit an den Übergängen vom digitalen Objekt, Zustand oder Prozess zum digitalen Objekt, Zustand oder Prozess (Fig. 6a). Beispiel: Der Client wird zwischen einer Maschine, deren OPC UA Variablen bzw. Values ohne die vorliegende Erfindung konfiguriert wurde, und einer Maschine, deren OPC UA Variablen bzw. Values mit vorliegender Erfindung konfiguriert wurde, eingebunden.
d) gewährleisten können, dass beispielsweise in den OPC UA Variablen bzw. Values die für die Interoperabilität richtigen Daten/Informationen eingesetzt werden. Unabhängig davon welche Schreibvariante, welches Synonym oder welchen fremdsprachigen Term der Nutzer beispielsweise in das HMI der Maschinen eingibt, wird immer erkannt, welches die entsprechende ID bzw. Term und/oder Zeichen für die Interoperabilität in der M2M-Kommunikation ist.
e) bestehen aus
   - einer Input-Einrichtung (g in Fig. 3), die der Eingabe zu evaluierender und/oder konvertierender Daten/Informationen dient, wobei die Daten aus einem bzw. mehreren Termen und/oder Zeichen bestehen. Die Input-Einrichtung weist als Funktionseinheiten eine Eingabe-Einheit (11) und eine Metadatenselektions-Einheit (10) auf,
   - in einer bevorzugten Ausführung einer Terminologie-Einrichtung (i in Fig. 3), in der die von der Terminologie-Einrichtung des Host (b in Fig. 3) bezogenen Terme und/oder Zeichen gespeichert werden. In einer weiteren Ausführung kann der Client direkt auf die Terminologie-Einrichtung im Host zugreifen,
   - einer Evaluierungs-Einrichtung (h in Fig. 3) die automatisch erkennt, ob es sich bei den eingegebenen Termen und/oder Zeichen um einen Oberbegriff oder um das eindeutige Objekt, Zustand oder Prozess handelt, und welches der richtige Term und ID für die M2M-Kommunikation ist. Die Evaluierungs-Einrichtung weist als Funktionseinheiten eine Eingabeanalyse-Einheit und eine Dialog-Einheit auf,
   - einer Output-Einrichtung (j in Fig. 3), die den für die Interoperabilität passenden Term bzw. ID ausspielt.

Die spezifische Verarbeitung der Einheiten des Hosts und des Clients wird später beschrieben.

### KURZE BESCHREIBUNG DER ZEICHNUNGEN

Nachfolgend werden Ausführungsbeispiele der Erfindung anhand der Zeichnungen näher erläutert. In diesen zeigen:
Figur 1 die durch die Erfindung zu lösende Problematik der fehlschlagenden M2M-Kommunikation. HMI = Human Machine Interface, DIP = Data Integration Point, DEP = Data End Point, Kommunikationsprotokoll OPC UA.
Figur 2 das Verfahren und/oder die Einrichtung zur Erzeugung einer dynamischen Interoperabilität in der M2M-Kommunikation. IE Host = Interoperabilitätseinrichtung Host, IE Client = Interoperabilitätseinrichtung Client.
Figur 3 als Blockdiagramm den Aufbau der Interoperabilitäts-Einrichtung.
Figuren 4a und 4b
   als Flussdiagramm die Arbeitsweise des Hosts der Interoperabilitäts-Einrichtung.

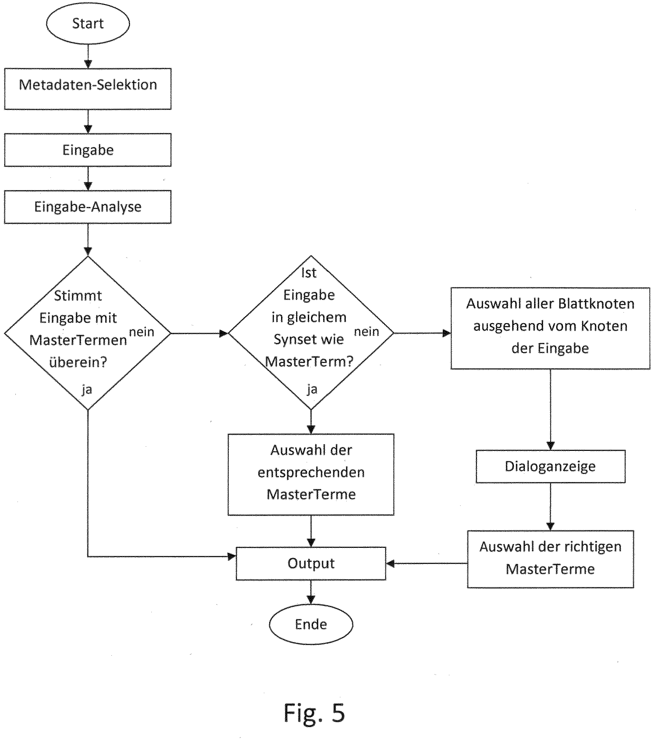

Figur 5 als Flussdiagramm die Arbeitsweise des Clients der Interoperabilitäts-Einrichtung.
Figuren 6a und 6b
   Ausführungen für die Lokalisierung des Clients der Interoperabilitätseinrichtung im Verhältnis zur Maschine.
Figuren 7a bis 7c
   einzelne Zwischenergebnisse der Arbeitsweise des Hosts zur Evaluierung und/oder Erzeugung der Interoperabilität für die M2M-Kommunikation.

### BESCHREIBUNG BEVORZUGTER AUSFÜHRUNGSBEISPIELE

Ein Ausführungsbeispiel der Erfindung wird im Folgenden erläutert.

### Ziel der Arbeitsweise des Hosts der Interoperabilitätseinrichtung

Ziel der Erfindung ist es, Wortnetze/Teilwortnetze - in der bevorzugten Ausführung ein Baumdiagramm - automatisiert zu erzeugen, die so mit semantischem, technischem, ökonomischem, linguistischem und anderem Wissen versehen werden, dass die Daten "wissen", welche Anforderungen sie in welcher Situation erfüllen müssen, und welches die für die M2M-Kommunikation relevanten Terme und IDs sind. Unter einem Wortnetz/Teilwortnetz versteht man in der Computerlinguistik eine Art von semantischem Netz, in dem lexikalische Zeichen und Konzepte durch semantische Relationen miteinander verbunden sind.

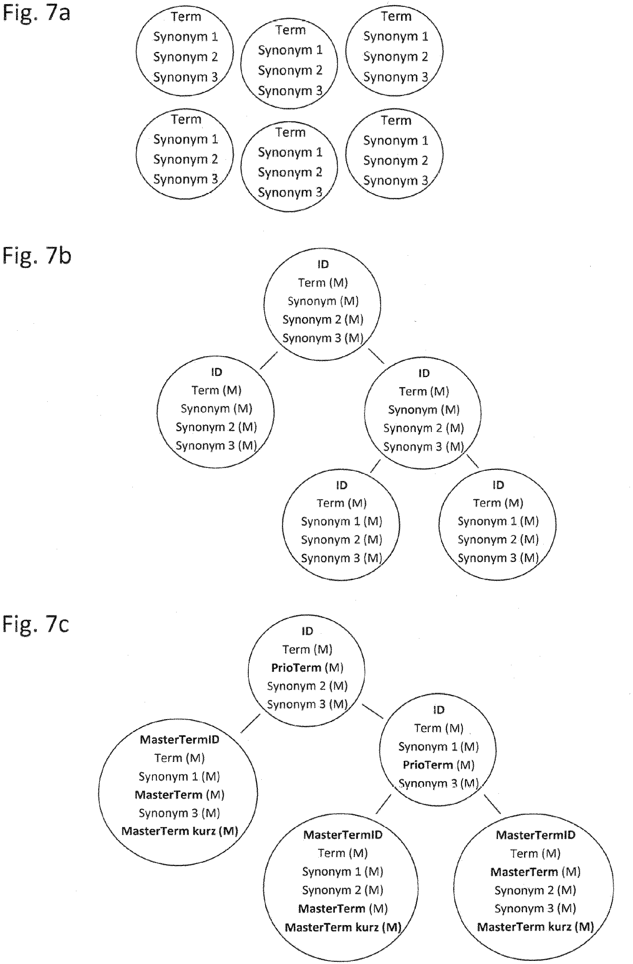

Die Knoten der Wortnetze/Teilwortnetze sind erfindungsgemäß nach folgendem Schema aufgebaut:
- Zwischen den einzelnen Knoten bestehen konzeptuelle Relationen der Hyponymie/Hyperonymie. Darunter versteht man eine semantische Unterordnung wie beispielsweise Innen-Sechskantschraube → Sechskantschraube, bzw. eine semantische Überordnung (Schraube ist Hyperonym zu Sechskantschraube).
- Jeder Knoten enthält ein Konzept und/oder Synset (Fig. 7a). Konzepte werden in der Computerlinguistik durch ein oder mehrere lexikalische Zeichen repräsentiert. Die bedeutungsgleichen bzw. synonymen lexikalischen Zeichen (z.B. ISO 8765 / Sechskantschraube mit Teilgewinde und metrischem Feingewinde) werden in Synsets zusammengefasst. Unabhängig davon, welcher Term und/oder Zeichen für einen Sachverhalt gewählt wird, "wissen" die Daten, dass alle anderen Terme und/oder Zeichen des Synsets die gleiche Bedeutung haben. Somit erkennen die Daten beispielsweise automatisch, dass sich "Waschmittellade" und "Waschmittelbehälter" auf den gleichen Gegenstand beziehen.

- Jeder Term und/oder Zeichen eines Knotens enthält semantische, technische, ökonomische, linguistische und andere Metadaten (M) (Fig. 7b). Wird beispielsweise die Benennung "Schraube DIN 7985" verwendet, so "wissen" die Daten, dass diese Benennung veraltet ist und auf Grund geänderter Richtlinien aktuell mit "Schraube DIN ISO 7045" bezeichnet werden muss. Abhängig davon, in welcher Infrastruktur ein Term und/oder Zeichen verwendet wird, "wissen" die Daten aufgrund der hinterlegten Metadaten (M), dass ein bestimmter Term und/oder Zeichen des Synsets eingesetzt werden muss, da er beispielsweise das Kriterium der maximalen Zeichenlänge eines Materialkurztextes erfüllt.
- Jeder Knoten erhält eine feste ID (Fig. 7b). In Prozessen, in denen keine sprachliche Verarbeitung möglich ist, kann die feste ID eines Knotens verwendet werden. Die Daten "wissen" jedoch, dass anderen Terme und/oder Zeichen des Konzepts und/oder Synsets die gleiche Bedeutung wie die entsprechende ID haben.
- Jeder Knoten enthält einen noch näher zu erläuternden priorisierten Term (PrioTerm), der allgemeine Gültigkeit besitzt (Fig. 7c). Die Daten "wissen" jedoch, dass es sich bei allen anderen Termen und/oder Zeichen des Konzeptes und/oder Synsets um den gleichen Gegenstand bzw. die gleiche Tätigkeit handelt.
- Jeder Blattknoten enthält einen noch näher zu erläuternden MasterTerm, einen MasterTerm kurz und eine MasterTerm ID (Fig. 7c). Der MasterTerm, der MasterTerm kurz sowie die MasterTerm ID sind insbesondere dazu vorgesehen, für die Interoperabilität im Rahmen von Industrie 4.0 und der M2M-Kommunikation verwendet zu werden.
   Die Daten "wissen" jedoch, dass es sich bei allen anderen Termen und/oder Zeichen des Konzeptes und/oder Synsets um den gleichen Gegenstand bzw. die gleiche Tätigkeit handelt.

Im Folgenden wird erläutert, wie der maschinenlesbare PrioTerm, MasterTerm und MasterTerm ID für die M2M-Kommunikation automatisiert mit Hilfe eines Algorithmus ermittelt werden. Ausgangspunkt ist eine Menge von möglichen Termen und/oder Zeichen innerhalb der einzelnen Knoten des Wortnetzes/Teilwortnetzes, von denen nicht bekannt ist, welches der passende Term und/oder Zeichen für die Interoperabilität in der M2M-Kommunikation ist. Es kommen dabei eine Menge von technischen, ökonomischen und linguistischen Rahmenbedingungen hinzu, deren Priorisierung von der jeweils vorhandenen Aufgabenstellung und Infrastruktur abhängt. Unter Berücksichtigung dieser Rahmenbedingungen muss also eine Entscheidung getroffen werden, welcher Term und/oder Zeichen innerhalb jedes einzelnen Knotens die größte technische, ökonomische, linguistische oder andere Übereinstimmung hinsichtlich des Wortnetzes/Teilwortnetz besitzt. Dieser Term und/oder Zeichen wird dann als PrioTerm und/oder MasterTerm und/oder MasterTerm kurz und/oder MasterTerm ID selektiert.

### Arbeitsweise des Hosts

### Schritt 1

Ausgangspunkt ist ein Wortnetzes/Teilwortnetzes - in der bevorzugten Ausführung ein Baumdiagramm. Die elementare Beschreibungseinheit in einem Wortnetz/Teilwortnetz ist das Konzept. Konzepte werden durch ein oder mehrere lexikalische Zeichen repräsentiert. Die bedeutungsgleichen bzw. synonymen lexikalischen Zeichen werden in Synsets zusammengefasst. Die Konzepte und/oder Synsets sind durch die konzeptuelle Relation der Hyperonymie/Hyponymie verbunden. Einzelne lexikalische Einheiten sind durch lexikalisch-semantische Relationen verbunden. Die Relationen der Hyperonymie/Hyponymie schaffen hierarchische Beziehungen zwischen den vernetzten Konzepte und/oder Synsets. Konzepte und/oder Synsets werden im Wortnetz/Teilwortnetz durch die Knoten, Beziehungen zu den Synsets, durch die Kanten des Graphen dargestellt.

In einem ersten Schritt werden die Terme und/oder Zeichen - im Folgenden als Term bezeichnet - (Fig. 7b) auf Basis ihrer Quellangaben bestimmten Kategorien zugeordnet. Diese Kategorien werden als Metadaten den Termen zugewiesen. Diese Kategorien können beispielsweise folgende Bereiche umfassen:
- Recht, Gesetze
- Normen, Richtlinien
- Standards Industrie 4.0
- Klassifikationssysteme
- Identifikationssysteme
- Patente

Die einzelnen Kategorien können bei Bedarf erweitert, reduziert und/oder geändert werden.

### Schritt 2

In einem zweiten Schritt werden die einzelnen Kategorien mit Priorisierungs-Parametern in Form von Metadaten versehen. Auch diese Zuordnung der Priorisierungs-Parameter kann bei Bedarf erweitert, reduziert und/oder geändert werden. Diese Priorisierungs-Parameter können beispielsweise wie folgt zugeordnet werden:
- Recht, Gesetze = Prio 1
- Normen, Richtlinien = Prio 2
- Standards Industrie 4.0 = Prio 3
- Klassifikationssysteme = Prio 4
- Identifikationssysteme = Prio 5
- Patente = Prio 6

### Schritt 3

In einem dritten Schritt werden die Terme mit Gültigkeits-Parametern in Form von Metadaten versehen. Dieser Gültigkeits-Parameter definiert, welcher Term den Priorisierungs-Parameter in Form des Metadatums "Prio x" erhält, wenn in einem Konzept und/oder Synset mehrere Terme mit der gleichen Kategorie vorhanden sind. Im Einzelnen wird dabei vorzugsweise wie folgt vorgegangen:

### Teilschritt 3.1

Falls ein Term oder mehrere Terme eines Konzeptes und/oder Synsets in der Kategorie "Recht, Gesetze" enthalten sind, wird dem/den Term(en) das Metadatum "Kategorie Recht, Gesetze" hinzugefügt. Wird nur einem Term das Metadatum "Kategorie Recht, Gesetze" hinzugefügt, erhält dieser zusätzlich das Metadatum "Prio 1". Wird zwei oder mehreren Termen das Metadatum "Kategorie Recht, Gesetze" hinzugefügt, so greift der Gültigkeits-Parameter. Dieser kann z.B. eine Überprüfung beinhalten, welches der Gesetze aktuell gültig ist, und Termen Vorrang einräumen, die in gültigen Gesetzen verwendet werden. Dem gültigen Term wird das Metadatum "Prio 1" hinzugefügt. Ist ein Term oder sind mehrere Terme des Konzeptes und/oder Synsets nicht in Rechtstexten/Gesetzen enthalten, werden keine Metadaten hinzugefügt.

### Teilschritt 3.2

Falls ein Term oder mehrere Terme eines Konzeptes und/oder Synsets in der Kategorie "Normen, Richtlinien" enthalten sind, wird dem/den Term(en) das Metadatum "Kategorie Normen, Richtlinien" hinzugefügt. Wird nur einem Term das Metadatum "Kategorie Normen, Richtlinien" hinzugefügt, erhält dieser zusätzlich das Metadatum "Prio 2". Wird zwei oder mehreren Termen das Metadatum "Kategorie Normen, Richtlinien" hinzugefügt, so greift der Gültigkeits-Parameter. Dieser kann z.B. eine Überprüfung beinhalten, ob Normen ranghöher sind als andere (etwa ISO vor DIN), oder einem Term Vorrang einräumen, der in einer Norm verwendet wird, die erst vor kurzer Zeit erarbeitet oder überarbeitet wurde. Dem gültigen Term wird das Metadatum "Prio 2" hinzugefügt. Ist ein Term oder sind mehrere Terme des Konzeptes und/oder Synsets nicht in Normen/Richtlinien enthalten, werden keine Metadaten hinzugefügt.

### Teilschritt 3.3

Entsprechende Abfragen werden auch für die verbleibenden Kategorien (in diesem Ausführungsbeispiel "Standards Industrie 4.0", "Klassifikationssysteme", "Identifikationssysteme" und "Patente") durchgeführt, wobei jeweils dem gültigen Term eines Konzeptes und/oder Synsets das Metadatum "Prio 3", "Prio 4", "Prio 5" bzw. "Prio 6" zugeordnet wird.

### Teilschritt 3.4

Anschließend wird geprüft, welcher Term im Wortnetz/Teilwortnetz den Priorisierungs-Parameter mit der höchsten Priorität besitzt.

### Teilschritt 3.5

Der entsprechende Term mit der höchsten Priorität wird nun gegen einen linguistischen Leitfaden geprüft. Darunter versteht man ein linguistisches Regelwerk, z.B. Orthographie. Inhalt einer solchen Prüfung kann beispielsweise sein, ob der entsprechende Term einen Bindestrich nach dem zweiten Wortbestandteil aufweist oder nicht. Entspricht der entsprechende Term den linguistischen Regeln, so wird diesem zusätzlich das Metadatum "PrioTerm" hinzugefügt (Fig. 7c). Entspricht der entsprechende Term nicht den linguistischen Regeln, so werden dem linguistisch richtigen Term des Synsets die Metadaten "PrioTerm" und "ähnlich Prio" hinzugefügt.

### Teilschritt 3.6

Besitzen mehrere Terme im Wortnetz/Teilwortnetz einen Priorisierungs-Parameter mit der höchsten Priorität, so werden diese auf gegenseitige Konsistenz geprüft. Beispiel: Es wird geprüft, ob die Grund- und Bestimmungswörter eines Kompositums der betreffenden Terme gleich sind. *Inbus-Schraube* und *Innensechskant-Schraube* wären somit nicht konsistente Terme. Sind sie konsistent, dann werden diese Terme ebenfalls gegen einen linguistischen Leitfaden geprüft. Entspricht der jeweilige Term den linguistischen Regeln, so wird diesem zusätzlich das Metadatum "PrioTerm" hinzugefügt. Entspricht der jeweilige Term nicht den linguistischen Regeln, so werden dem linguistisch richtigen Term des Synsets die Metadaten "PrioTerm" und "ähnlich Prio" hinzugefügt. Sind die Terme nicht konsistent, dann wird diesen Termen das Metadatum "ink. Prio" zugewiesen. "ink. Prio" bedeutet, es muss eine aktive Selektion des PrioTerms stattfinden.

### Teilschritt 3.7

Enthält ein Wortnetz/Teilwortnetz kein Metadatum "Prio x", so erhält der Term des Wortnetzes/Teilwortnetzes das Metadatum "PrioTerm", der mit den PrioTermen semantisch verwandter Wortnetze/Teilwortnetze konsistent ist und den linguistischen Regeln entspricht. Beispiel: Besitzt das Wortnetz/Teilwortnetz *Inbusschlüssel, Innensechskontschlüssel* usw. kein Metadatum "Prio x", dann erhält *Innensechskontschlüssel* das Metadatum "PrioTerm", da im semantisch verwandten Wortnetz/Teilwortnetz der Term *Sechskantschraube* das Metadatum "PrioTerm" besitzt.

### Schritt 4

In einem vierten Schritt werden alle weiteren Konzepte und/oder Synsets des Wortnetzes/Teilwortnetzes gegen den unter Schritt 3 ermittelten PrioTerm geprüft. Es wird geprüft, welcher Term des jeweiligen Konzeptes und/oder Synsets konsistent mit dem unter Schritt 3 ermittelten PrioTerm ist und den linguistischen Regeln entspricht. Diesen Termen wird zusätzlich das Metadatum "PrioTerm" hinzugefügt.

### Schritt 5

In einem fünften Schritt wird in jedem Blattknoten des Wortnetzes/Teilwortnetzes das Metadatum "PrioTerm" durch das Metadatum "MasterTerm" ersetzt (Fig. 7c) und die ID wird zur "Master Term ID". Die Blattknoten repräsentieren in der hierarchischen Struktur des Wortnetzes die unterste Hierarchieebene, also die konkretesten Terme, z.B. eine ganz bestimmte Sechskantschraube, während die übergeordneten Knoten übergeordnete Terme, z.B. "Schraube" oder "Befestigungselemente", repräsentieren.

### Schritt 6

In der bevorzugten Ausführung erhält in einem sechsten Schritt in jedem Blattknoten die Kurzform des jeweiligen MasterTerms (limitierte Zeichenzahl) das Metadatum "MasterTerm kurz" (Fig. 7c).

### Schritt 7

In der bevorzugten Ausführung werden in einem siebten Schritt jeder ID eines Konzeptes und/oder Synsets die jeweiligen fremdsprachigen Terme zugeordnet, die ebenfalls entsprechend den Schritten 1 bis 6 der Arbeitsweise des Host bearbeitet werden.

### Schritt 8

Die Aktualisierung der Knoten wird laufend oder intermittierend durchgeführt. Ein Wortnetz/Teilwortnetz und Konzepte und/oder Synsets werden dabei wie folgt aktualisiert:
a) Sobald in einem Konzept und/oder Synset ein neuer Term hinzugefügt und/oder geändert wird, werden die Schritte 1-6 der Arbeitsweise des Hosts erneut durchgeführt und die entsprechenden Metadaten werden neu vergeben.
b) Sobald ein neues Konzept und/oder Synset im Wortnetz/Teilwortnetz eingefügt wird, werden die Schritte 1-6 der Arbeitsweise des Hosts erneut durchgeführt und die entsprechenden Metadaten werden neu vergeben.

### Ziel der Arbeitsweise des Hosts

Ziel der Erfindung ist es, eine eindeutige und automatische Identifikation der Entitäten beim Übergang vom physischen Objekt, Prozess oder Zustand zum digitalen Objekt, Prozess oder Zustand im Rahmen der M2M-Kommunikation zu ermöglichen.

Dies bedeutet, unabhängig welcher Term (welches Synonym, welche Schreibvariante oder welcher fremdsprachige Term) der Nutzer zum Beispiel über die HMI eingibt, dass die Einrichtung und/oder Verfahren zur Interoperabilität automatisch erkennt, dass es sich um ein und dieselbe Entität handelt und weist dieser automatisch eine eindeutige Identifikation via Master Term und/oder MasterTerm kurz und/oder MasterTerm ID zu. Beispiel: Unabhängig davon, ob am Maschinendisplay "Schraube DIN EN ISO 8765", "Sechskantschraube mit Teilgewinde und metrischem Feingewinde", oder "hexagon head screw ISO 8765" eingegeben wird, erkennt der Client automatisch, dass es sich um den gleichen Gegenstand handelt und ob es sich um eine Oberkategorie handelt oder um den eindeutigen Gegenstand.

Der Client wird verbunden mit der Schnittstelle vom physischen Objekt, Zustand oder Prozess zum digitalen Objekt, Zustand oder Prozess. Beispiel: Gibt der Nutzer der Maschine seine Daten über die HMI (Human Machine Interface) ein, so führt der Client im Hintergrund folgenden Algorithmus durch:

### Arbeitsweise des Client

### Schritt 1

In einer bevorzugten Ausführung erfolgt eine Voreinstellung mittels Selektion von Metadaten, z.B. eines Sprach-Parameters.

Ausgangspunkt ist der Input eines zu evaluierenden und/oder konvertierenden Terms in die Eingabe-Einheit des Client.

In einem ersten Schritt wird geprüft, ob der in die Eingabe-Einheit eingegebene Term in einem Konzept und/oder Synset enthalten ist, der einen MasterTerm enthält, und/oder der Term selbst ein MasterTerm oder ein MasterTerm kurz ist.

Falls auf den eingegebenen Term eines dieser Kriterien zutrifft, wird die MasterTerm ID und/oder der MasterTerm und/oder MasterTerm kurz des entsprechenden Knotens automatisch ausgegeben.

### Schritt 2

Falls auf den eingegebenen Term keines der Kriterien zutrifft, dann wird in einem zweiten Schritt geprüft, in welchem Konzept und/oder Synset des Wortnetzes/Teilwortnetzes sich der eingegebene Term befindet. Befindet sich der Term in einem Wurzelknoten oder einem inneren Knoten, dann erfolgt eine Auswahl aller Blattknoten des Wortnetzes/Teilwortnetzes, die über Pfade direkt mit dem entsprechenden Wurzelknoten oder inneren Knoten verbunden sind. Daraufhin werden alle MasterTerme und/oder MasterTerme kurz und/oder MasterTerm IDs der ausgewählten Blattknoten angezeigt. In der bevorzugten Ausführung erfolgt eine aktive Selektion des betreffenden MasterTerm und/oder MasterTerm kurz und/oder MasterTerm ID. Die Output-Einrichtung des Client gibt den ausgewählten MasterTerm und/oder MasterTerm kurz und/oder MasterTerm ID aus.

### Weitere Aspekte der Erfindung

Weitere wichtige Aspekte der Erfindung sind in den nachfolgenden Sätzen zusammengefasst:
1. Evaluierungs-Verfahren zur automatischen und dynamischen Evaluierung und/oder Erzeugung einer Interoperabilität mit folgenden Schritten:
   a) Zuordnen der Terme und/oder Zeichen eines Konzeptes und/oder Synsets zu vorgegebenen Kategorien, wobei jeder Kategorie ein Priorisierungs-Parameter zugeordnet ist, der einen Rang in einer Prioritätsrangfolge repräsentiert, und wobei dies für alle Konzepte und/oder Synsets des Wortnetzes/Teilwortnetzes erfolgt;
   b) Zuweisen eines Metadatums zu jedem Term und/oder Zeichens eines Konzeptes und/oder Synsets, wobei das Metadatum den Kategorisierungs-Parameter repräsentiert, und wobei dies für alle Konzepte und/oder Synsets des Wortnetzes/Teilwortnetzes erfolgt;
   c) Zuordnen der Terme und/oder Zeichen jedes einzelnen Konzeptes und/oder Synsets zu Gültigkeits-Parametern, wobei der Gültigkeits-Parameter definiert, welcher Term den Priorisierungs-Parameter "Prio x" erhält, wenn in einem Konzept und/oder Synset mehrere Terme mit der gleichen Kategorie vorhanden sind;
   d) Zuweisen eines Metadatums zu jedem Term und/oder Zeichen eines Konzeptes und/oder Synsets, wobei das Metadatum den Gültigkeits-Parameter repräsentiert, und wobei dies für alle Konzepte und/oder Synsets des Wortnetzes/Teilwortnetzes erfolgt;
   e) Zuweisen eines Metadatums zu jedem der Terme und/oder Zeichen eines Konzeptes und/oder Synsets, wobei das Metadatum den Priorisierungs-Parameter der in Schritt a) zugeordnete Kategorie repräsentiert, und wobei dies für alle Konzepte und/oder Synsets des Wortnetzes/Teilwortnetzes erfolgt;
   f) Auswählen desjenigen Terms und/oder Zeichens aus allen Termen des Wortnetzes/Teilwortnetzes, der den Priorisierungs-Parameter mit dem höchsten Rang hat;
   g) Prüfung, ob der in Schritt f) ausgewählte Term und/oder Zeichen den vorgegebenen linguistischen Regeln entspricht;
   h) wenn der in Schritt f) ausgewählte Term und/oder Zeichen vorgegebenen linguistischen Regeln entspricht, dem Term und/oder Zeichen des Konzeptes und/oder Synsets ein Metadatum "PrioTerm" zugewiesen wird;
   i) Prüfung, welche Terme und/oder Zeichen jedes einzelnen Konzeptes und/oder Synsets des Wortnetzes/Teilwortnetzes konsistent zu dem in Schritt h) ausgewählten PrioTerm sind;
   j) Auswählen derjenigen Terme und/oder Zeichen aus allen Konzepten und/oder Synsets des Wortnetzes/Teilwortnetzes, die mit dem in Schritt h) ausgewählten PrioTerm konsistent sind;
   k) Prüfung, ob die einzelnen in Schritt j) ausgewählten Terme und/oder Zeichen vorgegebenen linguistischen Regeln entsprechen;
   l) wenn die in Schritt k) ausgewählten Terme und/oder Zeichen vorgegebenen linguistischen Regeln entsprechen, wird dem Term und/oder Zeichen der entsprechenden Konzepte und/oder Synsets ein Metadatum PrioTerm zugewiesen;
   m) in jedem Blattknoten des Wortnetzes/Teilwortnetzes wird das Metadatum "PrioTerm" durch das Metadatum "MasterTerm" ersetzt und die ID wird zur "MasterTerm ID".
   wobei die vorstehenden Schritte a) bis m) vorzugsweise für jeden Sprach-Parameter separat durchgeführt werden.
2. Evaluierungs-Verfahren nach Satz 1, bei dem, wenn in Schritt a) einer Kategorie mehrere Terme und/oder Zeichen eines Konzeptes und/oder Synsets zugeordnet wurden, einem Term dieser Kategorie die Erstrangigkeit entsprechend eines vorgegebenen Gültigkeits-Parameters zugeordnet wird und nur diesem Term entsprechend Schritt e) ein Metadatum zugewiesen wird, wobei das Metadatum den Priorisierungs-Parameter der in Schritt a) zugeordnete Kategorie repräsentiert.
3. Evaluierungs-Verfahren nach Satz 1 oder 2, bei dem dann, wenn ein Wortnetz/Teilwortnetz kein Metadatum "Prio x" enthält, der Term und/oder Zeichen das Metadatum "PrioTerm" zugewiesen bekommt, der mit PrioTermen semantisch verwandter Wortnetze/Teilwortnetze konsistent ist und den linguistischen Regeln entspricht.
4. Evaluierungs-Verfahren nach einem der Sätze 1 bis 3, bei dem dann, wenn in Schritt f) mehrere Terme und/oder Zeichen des Wortnetzes/Teilwortnetzes den Priorisierungs-Parameter mit der höchsten Priorität haben, geprüft wird, ob diese gegenseitig konsistent sind;
   a) bei dem dann, wenn die Terme und/oder Zeichen gegenseitig konsistent sind, diese gegen die vorgegebenen linguistischen Regeln geprüft werden;
   b) bei dem dann, wenn die konsistenten Terme und/oder Zeichen aus Schritt a) den vorgegebenen linguistischen Regeln entsprechen, diesen das Metadatum "PrioTerm" zugewiesen wird;
   c) bei dem dann, wenn die konsistenten Terme und/oder Zeichen aus Schritt a) nicht den vorgegebenen linguistischen Regeln entsprechen, eine aktive Selektion des "PrioTerms" erfolgen muss;
   d) bei dem dann, wenn die Terme und/oder Zeichen gegenseitig nicht konsistent sind, eine Zuweisung eines Metadatums erfolgt, das die Inkonsistenz der ermittelten Terme zum Ausdruck bringt, wobei dieses Metadatum bedeutet, dass eine aktive Selektion der entsprechenden Terme und/oder Zeichens erfolgen muss;
   e) bei dem dann, wenn die in Schritt d) selektierten Terme und/oder Zeichen den vorgegebenen linguistischen Regeln entsprechen, diesen das Metadatum "PrioTerm" zugewiesen wird;
   f) bei dem dann, wenn die in Schritt d) selektierten Terme und/oder Zeichen nicht den vorgegebenen linguistischen Regeln entsprechen, eine aktive Selektion des "PrioTerms" erfolgen muss.
5. Evaluierungs-Verfahren nach einem der Sätze 1 bis 4, bei dem dann, wenn der in Schritt g) ausgewählte Term nicht den vorgegebenen linguistischen Regeln entspricht, einem linguistisch richtigen Term und/oder Zeichen des Konzeptes und/oder Synsets ein Metadatum zugewiesen wird, das eine Ähnlichkeit zu dem Term zum Ausdruck bringt, der den Priorisierungs-Parameter mit dem höchsten Rang hat, wobei diesem linguistisch richtigen Term und/oder Zeichen des Konzeptes und/oder Synsets zusätzlich ein Metadatum "PrioTerm" zugewiesen wird.
6. Evaluierungs-Verfahren nach einem der Sätze 1 bis 5, bei dem dann, wenn der in Schritt I) ausgewählte Term nicht den vorgegebenen linguistischen Regeln entspricht, einem linguistisch richtigen Term und/oder Zeichen des Konzeptes und/oder Synsets ein Metadatum zugewiesen wird, das eine Ähnlichkeit zum "PrioTerm" zum Ausdruck bringt, wobei diesem linguistisch richtigen Term und/oder Zeichen des Konzeptes und/oder Synsets zusätzlich ein Metadatum "PrioTerm" zugewiesen wird.
7. Evaluierungs-Verfahren nach einem der Sätze 1 bis 6, bei dem jedem Konzept und/oder Synset zusätzlich eine Kurzform des jeweiligen "MasterTerms" zugewiesen wird, deren Zeichenzahl einen vorgegebenen einheitlichen Schwellenwert nicht überschreitet.
8. Evaluierungs-Verfahren nach einem der Sätze 1 bis 7, bei dem die einzelnen Kategorien und die Zuordnung der Priorisierungs-Parameter erweitert, reduziert oder geändert werden können.
9. Evaluierungs-Verfahren nach einem der Sätze 1 bis 8, bei dem Wortnetze/Teilwortnetze und Konzepte und/oder Synsets permanent aktualisiert, erweitert, reduziert und/oder geändert werden.
10. Evaluierungs-Verfahren Client zur automatischen und dynamischen Evaluierung und/oder Erzeugung einer Interoperabilität mit einer Prüfung, ob der eingegebene Term und/oder Zeichen ein MasterTerm, ein MasterTerm kurz oder eine MasterTerm ID ist.
11. Evaluierungs-Verfahren Client nach Satz 10, bei dem dann, wenn der eingegebene Term und/oder Zeichen kein MasterTerm, kein MasterTerm kurz oder keine MasterTerm ID ist, folgende Schritte durchgeführt werden:
   a) Prüfung, ob der eingegebene Term und/oder Zeichen in einem Konzept und/oder Synset enthalten ist, der einen MasterTerm, einen MasterTerm kurz oder eine MasterTerm ID enthält;
   b) Wenn Schritt a) zutrifft, wird der MasterTerm und/oder Master Term kurz und/oder Master Term ID des entsprechenden Konzeptes und/oder Synsets ausgewählt.
12. Evaluierungs-Verfahren Client nach Satz 11, bei dem dann, wenn der eingegebene Term und/oder Zeichen kein MasterTerm, kein MasterTerm kurz oder keine MasterTerm ID ist, und nicht in einem Konzept und/oder Synset enthalten ist, das einen MasterTerm, einen MasterTerm kurz oder eine MasterTerm ID enthält, folgende Schritte durchgeführt werden:
   a) Prüfung, in welchem Knoten des Wortnetzes/Teilwortnetzes sich der eingegebene Term und/oder Zeichen befindet, wobei dann, wenn sich der Term und/oder Zeichen in einem Wurzelknoten oder einem inneren Knoten befindet, eine Auswahl aller Blattknoten des Wortnetzes/Teilwortnetzes erfolgt, die über Pfade direkt mit dem entsprechenden Wurzelknoten oder inneren Knoten verbunden sind;
   b) Anzeige aller MasterTerme und/oder MasterTerme kurz und/oder MasterTerm IDs der in Schritt a) ausgewählten Blattknoten;
   c) vorzugsweise eine aktive Selektion des betreffenden Terms und/oder Zeichens der in Schritt b) angezeigten MasterTerme und/oder MasterTerme kurz und/oder Master Term IDs.

## Patentansprüche

1. Eine Interoperabilitäts-Einrichtung zur dynamischen Evaluierung und/oder Erzeugung einer Interoperabilität von Daten/Informationen mit:
einem Host mit
a) einer Input-Einrichtung (a in Fig. 3), die zur Eingabe dynamisch zu evaluierender und/oder zu konvertierender Daten eingerichtet ist, wobei die Daten aus einem bzw. mehreren Termen und/oder Zeichen bestehen,
b) einer Terminologie-Einrichtung (b in Fig. 3), in der Terme und/oder Zeichen und/oder IDs gespeichert sind, denen Attribute für ein semantisches Wortnetz/Teilwortnetz, vorzugsweise ein Baumdiagramm, und Metadaten zur Herkunft, Nutzung und Gültigkeit der Terme und/oder Zeichen und/oder IDs entnehmbar sind, wobei der Inhalt der Terminologie-Einrichtung in einem Speicher gespeichert ist,
c) einer Syntax-Einrichtung (c in Fig. 3), welche die für die Interoperabilität definierten linguistischen Regeln für die einzelnen Terme und/oder Zeichen bereitstellt, wobei der Inhalt der Syntax-Einrichtung in einem Speicher gespeichert ist,
d) einer Evaluierungs-Einrichtung (d in Fig. 3), mit einer Sprachauswahl-Einheit (1), einer Kategoriezuordnungs-Einheit (2), einer Kategoriepriorisierungs-Einheit (3), einer Gültigkeitszuordnungs-Einheit (4), einer Termpriorisierungs-Einheit (5), einer Konsistenzüberprüfungs-Einheit (6), einer Syntaxüberprüfungs-Einheit (7), einer Interoperabilitätsselektions-Einheit (8) und einer Dialog-Einheit (9), die unter Verwendung des Inhalts der Terminologie-Einrichtung (b in Fig. 3) und der Syntax-Einrichtung (c in Fig. 3) die für die Interoperabilität passenden Terme und/oder Zeichen und/oder IDs dynamisch evaluiert und/oder erzeugt,
e) einer Output-Einrichtung (e in Fig. 3), die das für die Interoperabilität evaluierte maschinenlesbare semantische Wortnetz/Teilwortnetz sowie die für die Interoperabilität passenden Terme und/oder Zeichen und/oder IDs ausspielt,
f) einer Aktualisierungs-Einrichtung (f in Fig. 3) zur Aktualisierung, Reduzierung und/oder Änderung der Wortnetze/Teilwortnetze und Konzepte und/oder Synsets,
und mit einem Client mit
g) einer Input-Einrichtung (g in Fig. 3), mit vorzugsweise einer Metadatenselektions-Einheit (10) zur Voreinstellung mittels Selektion von Metadaten und einer Eingabe-Einheit (11), die zur Eingabe zu evaluierender und/oder konvertierender Daten/Informationen eingerichtet ist, wobei die Daten aus einem bzw. mehreren Termen und/oder Zeichen bestehen,
h) vorzugsweise einer Terminologie-Einrichtung (i in Fig. 3), in der die von der Terminologie-Einrichtung des Host (b in Fig. 3) bezogenen Daten/Informationen in einem Speicher gespeichert werden,
i) einer Evaluierungs-Einrichtung (h in Fig. 3), mit einer Eingabeanalyse-Einheit (12), die automatisch erkennt, ob es sich bei den eingegebenen Daten/Informationen um einen Oberbegriff oder um das jeweils eindeutige Objekt, Zustand oder Prozess handelt, und welches der für die Interoperabilität passende Term und/oder Zeichen und/oder ID ist, und einer Dialog-Einheit (13),
j) einer Output-Einrichtung (j in Fig. 3), die den für die Interoperabilität passenden Term und/oder Zeichen und/oder ID ausspielt.

2. Evaluierungs-Einrichtung zur automatischen und dynamischen Evaluierung und/oder Erzeugung einer Interoperabilität mit folgenden Einheiten:
a) einer Kategoriezuordnungs-Einheit (2), die eingerichtet ist zum
- Zuordnen der Terme und/oder Zeichen eines Konzeptes und/oder Synsets zu vorgegebenen Kategorien, wobei jeder Kategorie ein Priorisierungs-Parameter zugeordnet ist, der einen Rang in einer Prioritätsrangfolge repräsentiert; dies erfolgt für alle Konzepte und/oder Synsets des Wortnetzes/Teilwortnetzes; und zum
- Zuweisen eines Metadatums zu jedem Term und/oder Zeichens eines Konzeptes und/oder Synsets, wobei das Metadatum den Kategorisierungs-Parameter repräsentiert; dies erfolgt für alle Konzepte und/oder Synsets des Wortnetzes/Teilwortnetzes;
b) einer Gültigkeitszuordnungs-Einheit (4), die eingerichtet ist zum
- Zuordnen der Terme und/oder Zeichen jedes einzelnen Konzeptes und/oder Synsets zu Gültigkeits-Parametern, wobei der Gültigkeits-Parameter definiert, welcher Term den Priorisierungs-Parameter "Prio x" erhält, wenn in einem Konzept und/oder Synset mehrere Terme mit der gleichen Kategorie vorhanden sind; und zum
- Zuweisen eines Metadatums zu jedem Term und/oder Zeichen eines Konzeptes und/oder Synsets, wobei das Metadatum den Gültigkeits-Parameter repräsentiert; dies erfolgt für alle Konzepte und/oder Synsets des Wortnetzes/Teilwortnetzes;
c) einer Kategoriepriorisierungs-Einheit (3), die eingerichtet ist zum
- Zuweisen eines Metadatums zu jedem der Terme und/oder Zeichen eines Konzeptes und/oder Synsets, wobei das Metadatum den Priorisierungs-Parameter der in der Kategoriezuordnungs-Einheit (2) zugeordnete Kategorie repräsentiert; dies erfolgt für alle Konzepte und/oder Synsets des Wortnetzes/Teilwortnetzes; und zum
- Auswählen desjenigen Terms und/oder Zeichens aus allen Termen des Wortnetzes/Teilwortnetzes, der den Priorisierungs-Parameter mit dem höchsten Rang hat;
d) einer Syntaxüberprüfungs-Einheit (7), die eingerichtet ist zur
- Prüfung, ob der in der Kategoriepriorisierungs-Einheit (3) ausgewählte Term und/oder Zeichen den vorgegebenen linguistischen Regeln entspricht; und zur
- Prüfung, ob die einzelnen in der Konsistenzüberprüfungs-Einheit (6) ausgewählten Terme und/oder Zeichen vorgegebenen linguistischen Regeln entsprechen;
e) einer Termpriorisierungs-Einheit (5), die dazu eingerichtet ist,
- dem Term und/oder Zeichen des Konzeptes und/oder Synsets ein Metadatum "PrioTerm" zuzuweisen, wenn der in der Kategoriepriorisierungs-Einheit (3) ausgewählte Term und/oder Zeichen vorgegebenen linguistischen Regeln entspricht; und
- dem Term und/oder Zeichen der entsprechenden Konzepte und/oder Synsets ein Metadatum "PrioTerm" zuzuweisen, wenn die in der Syntaxüberprüfungs-Einheit (7) überprüfen Terme und/oder Zeichen vorgegebenen linguistischen Regeln entsprechen;
f) einer Konsistenzüberprüfungs-Einheit (6), die eingerichtet ist
- zur Prüfung, welche Terme und/oder Zeichen jedes einzelnen Konzeptes und/oder Synsets des Wortnetzes/Teilwortnetzes konsistent zu dem in der Termpriorisierungs-Einheit (5) ausgewählten "PrioTerm" sind; und zum
- Auswählen derjenigen Terme und/oder Zeichen aus allen Konzepten und/oder Synsets des Wortnetzes/Teilwortnetzes, die mit dem in der Termpriorisierungs-Einheit (5) ausgewählten "PrioTerm" konsistent sind;
g) einer Interoperabilitätsselektions-Einheit (8), die dazu eingerichtet ist, in jedem Blattknoten des Wortnetzes/Teilwortnetzes das Metadatum "PrioTerm" durch das Metadatum "MasterTerm" zu ersetzen und die ID durch "MasterTerm ID" zu ersetzen;
wobei die vorstehenden Einheiten a) bis g) vorzugsweise für jeden Sprach-Parameter separat arbeiten.

3. Evaluierungs-Einrichtung nach Anspruch 2, in der, wenn in der Kategoriezuordnungs-Einheit (2) einer Kategorie mehrere Terme und/oder Zeichen eines Konzeptes und/oder Synsets zugeordnet wurden, einem Term dieser Kategorie die Erstrangigkeit entsprechend eines vorgegebenen Gültigkeits-Parameters zugeordnet wird und nur diesem Term von der Kategoriepriorisierungs-Einheit (3) ein Metadatum zugewiesen wird, wobei das Metadatum den Priorisierungs-Parameter der in der Kategoriezuordnungs-Einheit (2) zugeordnete Kategorie repräsentiert.

4. Evaluierungs-Einrichtung nach Anspruch 2 bis 3, in der dann, wenn ein Wortnetz/Teilwortnetz von der Kategoriepriorisierungs-Einheit (3) kein Metadatum "Prio x" zugewiesen wird, der Term und/oder Zeichen das Metadatum "PrioTerm" von der Termpriorisierungs-Einheit (5) zugewiesen bekommt, der mit PrioTermen semantisch verwandter Wortnetze/Teilwortnetze konsistent ist und den linguistischen Regeln entspricht.

5. Evaluierungs-Einrichtung nach Anspruch 2 bis 4, in der dann, wenn in Anspruch 2 die Kategoriepriorisierungs-Einheit (3) mehreren Termen und/oder Zeichen des Wortnetzes/Teilwortnetzes den Priorisierungs-Parameter mit der höchsten Priorität zugewiesen hat, eine Konsistenzüberprüfungs-Einheit (6) dazu dient zu prüfen, ob diese gegenseitig konsistent sind;
a) in der dann, wenn die Terme und/oder Zeichen gegenseitig konsistent sind, eine Syntaxüberprüfungs-Einheit (7) diese gegen die vorgegebenen linguistischen Regeln prüft;
b) in der dann, wenn die konsistenten Terme und/oder Zeichen aus Schritt a) den Vorgaben der Syntaxüberprüfungs-Einheit (7) entsprechen, diesen von der Termpriorisierungs-Einheit (5) das Metadatum "PrioTerm" zugewiesen wird;
c) in der dann, wenn die konsistenten Terme und/oder Zeichen aus Schritt a) nicht den Vorgaben der Syntaxüberprüfungs-Einheit (7) entsprechen, eine Dialog-Einheit (9) dazu dient, eine aktive Selektion des "PrioTerms" durchzuführen;
d) in der dann, wenn die Terme und/oder Zeichen gegenseitig nicht konsistent sind, eine Konsistenzüberprüfungs-Einheit (6) dazu dient, dass eine Zuweisung eines Metadatums erfolgt, das die Inkonsistenz der ermittelten Terme zum Ausdruck bring, wobei das Metadatum bedeutet, dass in einer Dialog-Einheit (9) eine aktive Selektion der entsprechenden Terme und/oder Zeichens erfolgen muss;
e) in der dann, wenn die in Schritt d) selektierten Terme und/oder Zeichen den Vorgaben der Syntaxüberprüfungs-Einheit (7) entsprechen, diesen das Metadatum "PrioTerm" zugewiesen wird;
f) in der dann, wenn die in Schritt d) selektierten Terme und/oder Zeichen nicht den Vorgaben der Syntaxüberprüfungs-Einheit (7) entsprechen, eine Dialog-Einheit (9) dazu dient, eine aktive Selektion des "PrioTerms" durchzuführen.

6. Evaluierungs-Einrichtung nach Anspruch 2 bis 5, in der dann, wenn der in der Syntaxüberprüfungs-Einheit (7) ausgewählte Term nicht den von der Syntaxüberprüfungs-Einheit (7) vorgegebenen linguistischen Regeln entspricht, von der Termpriorisierungs-Einheit (5) einem linguistisch richtigen Term und/oder Zeichen des Konzeptes und/oder Synsets ein Metadatum zugewiesen wird, das eine Ähnlichkeit zu dem Term zum Ausdruck bringt, der den Priorisierungs-Parameter mit dem höchsten Rang hat, wobei diesem linguistisch richtigen Term und/oder Zeichen des Konzeptes und/oder Synsets von der Termpriorisierungs-Einheit (5) zusätzlich ein Metadatum "PrioTerm" zugewiesen wird.

7. Evaluierungs-Einrichtung nach Anspruch 2 bis 6, in der dann, wenn der in der Syntaxüberprüfungs-Einheit (7) ausgewählte Term nicht den von der Syntaxüberprüfungs-Einheit (7) vorgegebenen linguistischen Regeln entspricht, von der Termpriorisierungs-Einheit (5) einem linguistisch richtigen Term und/oder Zeichen des Konzeptes und/oder Synsets ein Metadatum zugewiesen wird, das eine Ähnlichkeit zum "PrioTerm" zum Ausdruck bringt, wobei diesem linguistisch richtigen Term und/oder Zeichen des Konzeptes und/oder Synsets von der Termpriorisierungs-Einheit (5) zusätzlich ein Metadatum "PrioTerm" zugewiesen wird.

8. Evaluierungs-Einrichtung nach Anspruch 2 bis 7, die jedem Konzept und/oder Synset zusätzlich eine Kurzform des jeweiligen "MasterTerms" zuweist, deren Zeichenzahl einen vorgegebenen einheitlichen Schwellenwert nicht überschreitet.

9. Evaluierungs-Einrichtung nach Anspruch 2 bis 8, in der die einzelnen Kategorien und die Zuordnung der Priorisierungs-Parameter erweitert, reduziert oder geändert werden können.

10. Evaluierungs-Einrichtung nach Anspruch 2 bis 9, in der Wortnetze/Teilwortnetze und Konzepte und/oder Synsets permanent aktualisiert, erweitert, reduziert und/oder geändert werden.

11. Evaluierungs-Einrichtung Client zur automatischen und dynamischen Evaluierung und/oder Erzeugung einer Interoperabilität mit einer Eingabeanalyse-Einheit (12), die eingerichtet ist zur Prüfung, ob der eingegebene Term und/oder Zeichen ein MasterTerm, ein MasterTerm kurz oder eine MasterTerm ID ist.

12. Evaluierungs-Einrichtung Client nach Anspruch 11, in der dann, wenn der eingegebene Term und/oder Zeichen kein MasterTerm, kein MasterTerm kurz oder keine MasterTerm ID ist:
a) eine Prüfung in der Eingabeanalyse-Einheit (12) erfolgt, ob der eingegebene Term und/oder Zeichen in einem Konzept und/oder Synset enthalten ist, der einen MasterTerm, einen MasterTerm kurz oder eine MasterTerm ID enthält;
b) die Eingabeanalyse-Einheit (12) den MasterTerm und/oder MasterTerm kurz und/oder MasterTerm ID des entsprechenden Konzeptes und/oder Synsets auswählt, wenn Schritt a) zutrifft.

13. Evaluierungs-Einrichtung Client nach Anspruch 11, in der dann, wenn der eingegebene Term und/oder Zeichen kein MasterTerm, kein MasterTerm kurz oder keine MasterTerm ID ist, und nicht in einem Konzept und/oder Synset enthalten ist, das einen MasterTerm, einen MasterTerm kurz oder eine MasterTerm ID enthält:
a) eine Prüfung in der Eingabeanalyse-Einheit (12) erfolgt, in welchem Knoten des Wortnetzes/Teilwortnetzes sich der eingegebene Term und/oder Zeichen befindet, wobei dann, wenn sich der Term und/oder Zeichen in einem Wurzelknoten oder einem inneren Knoten befindet, eine Auswahl aller Blattknoten des Wortnetzes/Teilwortnetzes erfolgt, die über Pfade direkt mit dem entsprechenden Wurzelknoten oder inneren Knoten verbunden sind;
b) eine Dialog-Einheit (13) alle MasterTerme und/oder MasterTerme kurz und/oder MasterTerm IDs der in Schritt a) ausgewählten Blattknoten anzeigt;
c) vorzugsweise durch eine Dialog-Einheit (13) eine aktive Selektion des betreffenden Terms und/oder Zeichens der in Schritt b) angezeigten MasterTerme und/oder MasterTerme kurz und/oder MasterTerm IDs erfolgt.

14. Ein Interoperabilitäts-Verfahren zur dynamischen Evaluierung und/oder Erzeugung einer Interoperabilität von Daten/Informationen mit:
einem Host-Verfahren mit
a) einem Input-Verfahren, das der Eingabe dynamisch zu evaluierender und/oder zu konvertierender Daten dient, wobei die Daten aus einem bzw. mehreren Termen und/oder Zeichen bestehen,
b) einem Terminologie-Verfahren, bei dem Terme und/oder Zeichen und/oder IDs gespeichert werden, denen Attribute für ein semantisches Wortnetz/Teilwortnetz, vorzugsweise ein Baumdiagramm, und Metadaten zur Herkunft, Nutzung und Gültigkeit der Terme und/oder Zeichen und/oder IDs entnehmbar sind,
c) einem Syntax-Verfahren, das die für die Interoperabilität definierten linguistischen Regeln für die einzelnen Terme und/oder Zeichen bereitstellt,
d) einem Evaluierungs-Verfahren, das unter Verwendung des Terminologie-Verfahrens und des Syntax-Verfahrens, die für die Interoperabilität passenden Terme und/oder Zeichen und/oder IDs dynamisch evaluiert und/oder erzeugt,
e) einem Output-Verfahren, welches das für die Interoperabilität evaluierte maschinenlesbare semantische Wortnetz/Teilwortnetz sowie die für die Interoperabilität passenden Terme und/oder Zeichen und/oder IDs ausspielt,
f) einem Aktualisierungs-Verfahren, zur Aktualisierung, Reduzierung und/oder Änderung der Wortnetze/Teilwortnetze und Konzepte und/oder Synsets,
und mit einem Client-Verfahren mit
g) einem Input-Verfahren, das vorzugsweise einer Voreinstellung mittels Selektion von Metadaten und der Eingabe zu evaluierender und/oder konvertierender Daten/Informationen dient, wobei die Daten aus einem bzw. mehreren Termen und/oder Zeichen bestehen,
h) vorzugsweise einem Terminologie-Verfahren, das die aus dem Terminologie-Verfahren des Host-Verfahrens bezogenen Daten/Informationen speichert,
i) einem Evaluierungs-Verfahren, das automatisch erkennt, ob es sich bei den eingegebenen Daten/Informationen um einen Oberbegriff oder um das jeweils eindeutige Objekt, Zustand oder Prozess handelt, und welches der für die Interoperabilität passende Term und/oder Zeichen und/oder ID ist,
j) einem Output-Verfahren, das die für die Interoperabilität passenden Terme und/oder Zeichen und/oder IDs ausspielt.
